# EUROPEAN PATENT SPECIFICATION

(11) **EP 2 820 847 B1**
(45) Date of publication and mention of the grant of the patent: **26.02.2020**
(21) Application number: 12709206.2
(22) Date of filing: 27.02.2012
(51) Int. Cl.: H04N 9/31

(54) **MULTI-SEGMENT IMAGER**
MEHRSEGMENTALER BILDGEBER
DISPOSITIF D'IMAGERIE MULTI-SEGMENTS

(43) Date of publication of application: 07.01.2015
(73) Proprietor: Dolby Laboratories Licensing Corporation, San Francisco, CA 94103 (US)
(72) Inventor: RICHARDS, Martin J., San Francisco, CA 94103-4918 (US); DAMBERG, Gerwin, Vancouver, British Columbia V5R 3Y1 (CA); WARD, Gregory John, San Francisco, CA 94103-4918 (US)
(74) Representative: Dolby International AB Patent Group Europe
(86) International application number: PCT/US2012/026787
(87) International publication number: WO 2013/130037

(56) References cited:
- EP-A2- 1 363 460
- JP-A- 2008 292 736
- US-A1- 2006 250 580
- US-A1- 2008 013 052
- US-A1- 2008 284 677
- US-A1- 2011 228 231
- US-A1- 2011 304 825
- US-B1- 6 462 795
- US-B1- 6 469 834

## Description

### TECHNICAL FIELD

The present invention relates to imaging systems and, more particularly, to imaging system comprising a plurality of imaging segments.

### BACKGROUND

In the field of large displays systems and/or large projector systems, it is known to partition the emitters and to provide a plurality of optical paths to form a coherent image upon a display or a projector screen. Such system may be found variously described in: (1) co-owned United States Patent Application Publication Number 20080284677 ("the '677 application") entitled "MODULAR ELECTRONIC DISPLAYS"; (2) United States Patent Number 7334901 entitled "LOW PROFILE, LARGE SCREEN DISPLAY USING A REAR PROJECTION ARRAY SYSTEM"; (3) United States Patent Number 5988817A entitled "MULTIPROJECTION SYSTEM"; (4) United States Patent Number 6309072B1 entitled "VIDEO PROJECTION SYSTEM FOR PROJECTING MORE THAN ONE PICTURE"; (5) United States Patent Application Publication Number 20070091277A1 entitled "LUMINANCE BASED MULTIPLE PROJECTOR SYSTEM"; (6) United States Patent Number 7108400B2 entitled "LIGHT SOURCE UNIT AND PROJECTOR".

EP 1 363 460 A2 discloses a lighting system for a projector, wherein the lighting system comprises an LED array and a reflective plate at the rear side of the LEDs in the light emitting direction, retardation films, a taper rod lens array, a rod lens array, and a reflective polarizing plate.

US 2011/228231 A1 discloses a projection display having at least one light source and optical channels. The optical channels comprise at least one field lens, to which respectively one object structure to be imaged and also at least one projection lens are assigned. The distance of the projection lenses from the assigned object structures corresponds to the focal distance of the projection lenses whilst the distance of the object structures to be imaged from the assigned field lens is chosen such that a Köhler illumination of the assigned projection lens is made possible. Then the individual projections are superimposed to form the total image.

US 6 462 795 B1 discloses a display system comprising a substantially flat matrix LCD panel, a viewing screen spaced from the LCD panel and curved in one or more directions to conform with the contour of a support structure, and an image transfer arrangement comprising at least one microlens array curved in a similar sense to the screen and disposed between the LCD panel and the screen whose individual lens elements transmit respective portions of the image on the LCD panel onto corresponding positions on the screen.

US 2008/284677 A1 discloses a modular display made up of arrays of modules that include light sources, light modulators, and control circuits that perform image processing functions. The modules include optical systems that project light onto a screen.

WO 2011/157632 A1 discloses a projection display having a grid arrangement of light sources and condenser optics configured such that light from respective individual light sources is directed to associated subareas of an image generator, wherein a two-dimensional arrangement of optical projection elements is configured as a projection array.

### SUMMARY

The invention is defined by the claims.

Other features and advantages of the present system are presented below in the Detailed Description when read in connection with the drawings presented within this application.

### BRIEF DESCRIPTION OF THE DRAWINGS

Exemplary embodiments are illustrated in referenced figures of the drawings. It is intended that the embodiments and figures disclosed herein are to be considered illustrative rather than restrictive.
FIG. 1 shows one embodiment of an image projection system comprising a number of modules further comprising an emitter and a modulator.
FIG. 2 shows one embodiment of a module as utilized in the image projection system of FIG. 1.
FIG. 3 depicts one embodiment of the multi-segment imager as made in accordance with the principles of the present invention.
FIG. 3A depicts one possible overlapping pattern of illumination that may be produced from imaging systems in the present applications.
FIG. 4 depicts another embodiment of the multi-segment imager as made in accordance with the principles of the present invention.
FIG. 5A shows one embodiment of a single segment and/or light path of a single emitter in an imaging system comprising one modulator in the light path of the present invention.
FIG. 5B shows one embodiment of a single segment and/or light path of a single emitter in an imaging system comprising multiple modulators in the light path of the present invention.
FIG. 6 shows an embodiment of an array of conduits conducting light from a modulator to an array of projection lens.
FIGS. 7 and 8 show a plurality of embodiments of the light path through a single conduit comprising a single emitter and a plurality of emitters, respectively.
FIG. 9 depicts one embodiment of an array of modulator panels illuminated by a set of emitters.
FIG. 10 shows one embodiment of the display system made in the manner of FIG. 9 illuminating a projecting screen.
FIG. 11A shows another embodiment of an array of modulator panels illuminated by a set of emitters.
FIG. 11B shows yet another embodiment of an array of modulator panels illuminated by a set of emitters.
FIG 12 shows one embodiment of the display system made in the manner of FIG. 11 illuminating a projecting screen.
FIGS. 14A and 14B show two possible embodiments of a polarization re-capture element.

### DETAILED DESCRIPTION

Throughout the following description, specific details are set forth in order to provide a more thorough understanding to persons skilled in the art. However, well known elements may not have been shown or described in detail to avoid unnecessarily obscuring the disclosure. Accordingly, the description and drawings are to be regarded in an illustrative, rather than a restrictive, sense. Any "examples" and "embodiments" of the description not falling within the scope of the claims do not form part of the invention and are provided for illustrative purposes only.

In conventional movie projector systems, despite their longevity in use in the industry, there are areas that may be improved upon. First, their concentrated light sources are typically lossy, single-points of failure. Secondly, their conventional optics may tend to scatter light through a single lens/optical path, particularly when contaminants like oil or dust may collect on the single lens/optical path.

### Introduction to Modular Display/Projector Systems

Now, in continued reference to the co-owned '677 application, modular projector systems are disclosed that comprise arrays of modules that include light sources and light modulators. The modules also may include control circuits that perform some image processing functions. The modules may illuminate a screen directly or may include optical systems that project light onto a screen.

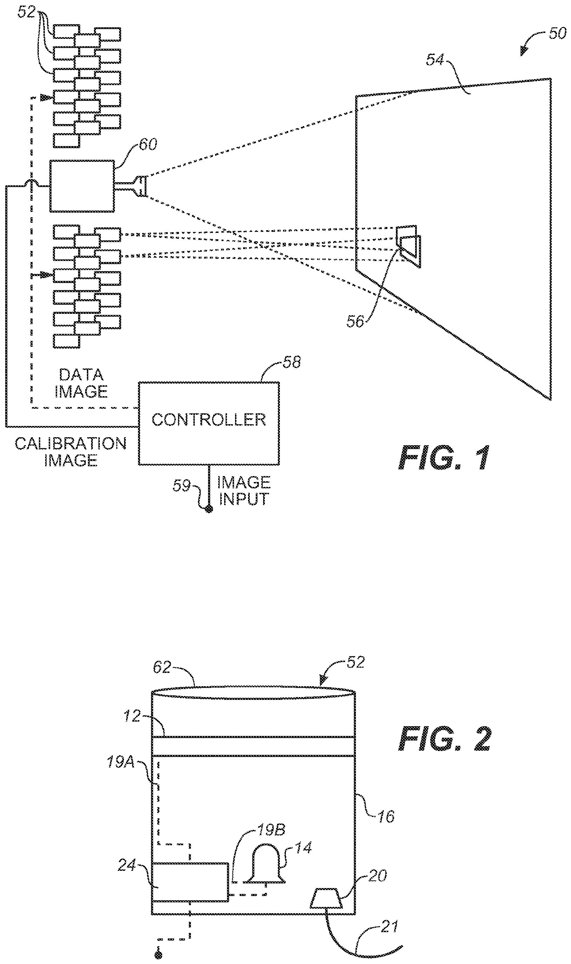

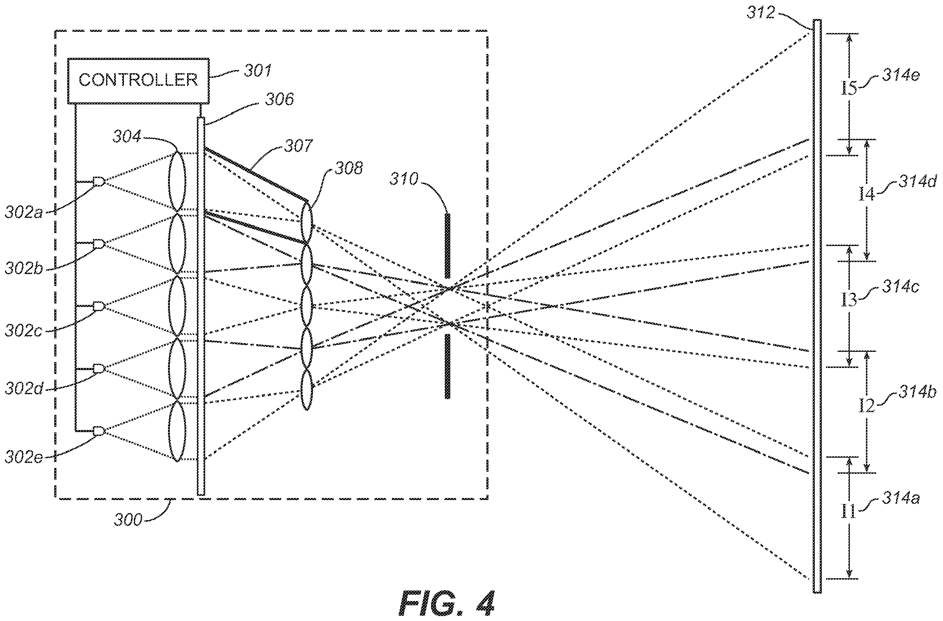

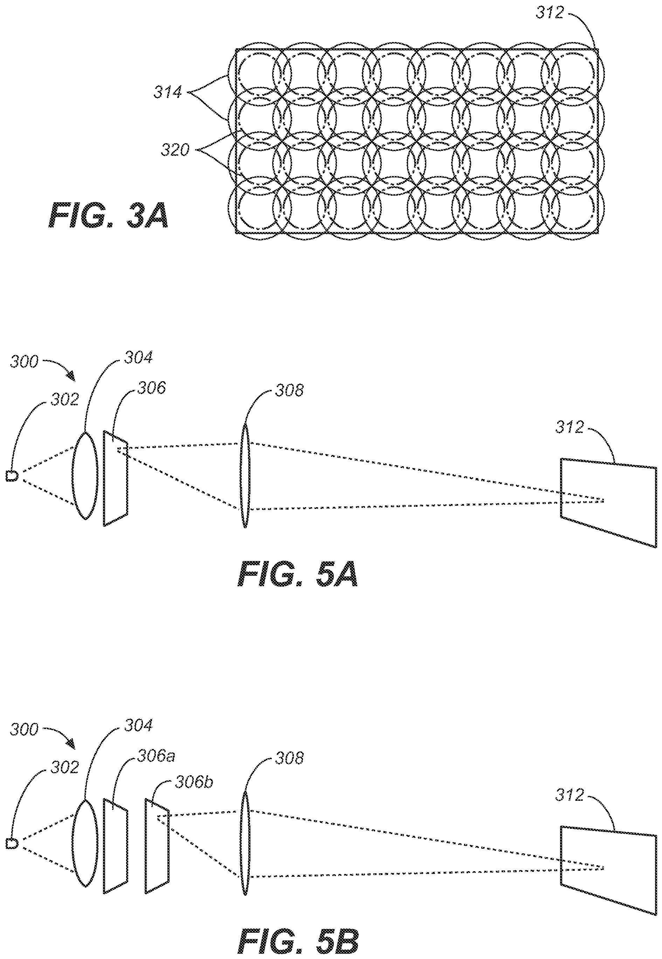

FIG. 1 (which is FIG. 4 in the '677 application) shows an image projection system 50 in which a plurality of modules 52 are used to provide a projection-type display. As shown in FIG. 2 (which is FIG. 5 in the '677 application), modules 52 may be similar in construction to any of modules in the '677 application with the addition, in some embodiments, of a projection optical system 62 that projects an image of modulator 12 onto screen 54. Optical system 62 may comprise any suitable arrangement of lenses, mirrors, and/or other optical elements. In some cases an optical system 62 may direct light at an angle to the optical axis of module 52. For example, an optical system 62 may deflect light from a centrally-located module 52 to illuminate an area 56 in a corner of screen 54. In some embodiments each module 52 has its own optical system 62.

In some cases where screen 54 is far enough away from modules 52 it may be unnecessary to provide an optical system 62 on the outer side (i.e. the screen side) of modulator 12 as the light sources of modules 52 may produce light that is well-enough collimated to image the modulator 12 onto screen 54 without focusing on the screen side of modulator.

Each module 52 projects onto a corresponding area 56 of screen 54. System 50 includes enough modules 52 so that the entire area of screen 54 is covered by areas 56 corresponding to the modules 52. Typically at least most of modules 52 have corresponding areas 56 that are much smaller than screen 54. For clarity, FIG. 1 shows only two areas 56. Every spot on screen 54 preferably lies within two or more areas 56. Most preferably, every spot on screen 54 lies within 4 or 5 more areas 56. In currently preferred embodiments of the invention, each point on at least a main viewing area of screen 54 lies within 5 to 15 areas 56. It is not necessary that there be the same number of overlapping areas 56 at every point on screen 56.

Modules 52 may be mounted rigidly so that the locations and orientations of the corresponding areas 56 do not move on screen 54. Modules 52 may be mounted on one or more backplanes, or modules 52 may be mounted in some other manner. For example, modules 52 may be mounted individually or in bundles. Modules 52 may be arranged in one or multiple banks of modules or may be distributed individually. System 50 may include a large number of modules 52. For example, some embodiments of system 50 include 1000 to 15,000 modules 52. As will be discussed below (and in reference to other embodiment shown in later Figures), other embodiments may use much less modules, as the efficiency and luminance of emitters improve over time.

Modules 52 may be located in any suitable locations including the ceiling of a theater or other room. Modules 52 may optionally be thermally coupled to air conditioning or other air ducts to help to maintain modules 52 within a desired operating temperature range.

Signals and electrical power may be provided to modules 52 in any suitable manner. A single video and power cable or data bus may extend to all modules 52. In the alternative, separate power and video cables may connect to different modules 52 or different groups of modules 52. Modules 52 may receive signals by way of wires, optical fibers, or wireless communication methods. Communication of signals to modules 52 may be simplified because the same data may be provided to all of modules 52 (or, in some embodiments, all modules 52 of each color).

A controller 58 provides image data to modules 52. Each module 52 emits a pattern of light according to the image data. The image data is, or is based on, data received at an image input 59. With modules as illustrated in FIG. 2, the pattern of light is determined by the intensity at which light source 14 is operated as modulated, on a pixel-by-pixel basis by modulator 12.

It is possible, but not necessary, to carefully align modules 52. The orientations and locations of the areas 56 corresponding to the different modules 52 may be essentially random as long as every point on the viewing area of screen 54 is covered with an appropriate number of overlapping areas 56. Areas 56 are not necessarily all the same shape or size. Areas 56 are not necessarily squares, rectangles or other regular shapes. For example, in some embodiments, areas 56 may be trapezoidal or elliptical, partly or entirely as a result of the angles at which the corresponding modules 52 are directed at screen 54.

Areas 56 are not necessarily the same size. Different modules 52 may have projection optics which causes the modules to cover differently-sized areas 56. For example, some modules 52 may have wide-angle lenses which cause the corresponding areas 56 to be large, possibly, in some cases, covering a significant fraction of the entire screen 54 or even the entire screen 54. Other modules 52 may have optics that causes the corresponding areas 56 to be quite small.

Arranging modules 52 so that areas 56 are not arranged in a regular pattern avoids the creation of visible seams in the overall image. It also makes it much easier to install and align modules 52.

FIG. 2 is a schematic view of a module 52. Module 52 has a modulator 12 illuminated by a light source 14. Modulator 12 may comprise a transmission-type modulator, such as a liquid crystal display ("LCD") panel or the like. In some embodiments, each modulator 12 comprises a 2-dimensional array of independently-controllable pixels.

Light source 14 preferably comprises a solid-state light source such as a light-emitting diode ("LED"). However, other types of light sources may be used in the alternative. In some embodiments, light sources 14 have variable light outputs.

Module 52 has a housing 16 that supports modulator 12 and light source 14. Housing 16 may comprise mounting points such as mounting tabs, clips, or the like which allow housing 16 to be mounted to a suitable backplane. The backplane may be planar but this is not mandatory.

Controller 24 may receive signal and power from external sources (not shown). Within module 52, a signal 19A may drive modulator 12 and a signal 19B may drive light source 14. Signals 19A and 19B may be received through controller 24 or may be generated in module 52 from other signals received by way of controller 24.

A light sensor 20 may optionally be provided for calibrating the light output of a module 52. In some applications this may be desirable because of variations in light sources 14 or the components that control light sources 14. For example, due to manufacturing process variations, different LEDs of the same type may provide different light output even when driven by the same current.

In some embodiments, light sensors 20 may comprise the ends of optical fibers 21 that carry light to a common sensor. Providing a central sensor for calibration purposes may avoid having the accuracy of calibration affected by differences between individual sensors or temperature differences between different modules 52. In other embodiments, separate light sensors are provided for each module 52. In some cases, the outputs of light sources 14 may be sufficiently predictable that it is not necessary to provide a light sensor 20.

In some embodiments, the brightness of light source 14 may be controlled over a reasonable range. For example, light source 14 may be driven by an 8-bit driver that provides 256 brightness levels.

To achieve a bright image on screen 54, it may be desirable that modules 52 be optically efficient. One way to make modules 52 optically efficient is to make modulator 12 a monochrome modulator. The color of the light emitted by the module 52 may be determined primarily by the color of light source 14 or, alternatively, by a color filter. In embodiments that employ monochrome modules, system 50 may include modules 52 having light sources that emit different colors of light. For example, some modules 52 may have sources of red light, others may have sources of green light and others may have sources of blue light. In such embodiments, it is desirable that areas 56 corresponding to two or more, and possibly three or more modules 52 of each color should overlap at each point in the viewing area of screen 54. A system 50 may include modules 52 of three or more colors chosen to provide a suitable color gamut for the images to be displayed.

The optical efficiency of a module 52 may be further increased by making modulator 12 have a relatively low resolution. Lower-resolution modulators tend to have higher fill factors than higher-resolution modulators. This typically results in higher overall optical efficiency. For example, modulators 12 may have a resolution of a few-dozen to a few hundred pixels in each direction. For example, in some embodiments, light modulators 12 have fewer than 500 pixels in at least one direction. In some embodiments, light modulators 12 have fewer than 220 pixels. In one embodiment, modulators 12 have resolutions of 320 by 240 pixels.

Where modulator 12 may pass light of a particular polarization state, light source 14 may be selected and arranged to emit light in the polarization state that is preferentially passed by modulator 12. For example, where modulator 12 is an LCD that passes light that is linearly polarized in a certain direction, light source 14 may be an LED that emits polarized light and the LED may be aligned so that the polarization of the emitted light is aligned with the polarization direction of the LCD.

In cases where each module 12 generates light of one color, it is possible to operate each module 12 at a reduced refresh rate in comparison to systems that use one modulator to time-multiplex several colors.

System 50 may also include a camera 60 located to take images of screen 54. Camera 60 may be used in various ways. Camera 60 is a high-resolution camera. A primary use for camera 60 is for calibrating system 50. Since camera 60 is required only for calibration purposes, camera 60 does not need to be present except during calibration of a system 50.

In systems having an overall structure similar to that of FIG. 2, color may be provided in any of various different ways. These include providing monochrome modules of at least two and, in most cases three or more different colors or providing modules that each project a color image. Where modules each project a color image, the color image may be obtained in various ways including: providing a color modulator in each module or providing a monochrome modulator operating in a field sequential mode wherein a color of light incident on the modulator is changed for each of a series of fields. The color of light incident on the modulator may be varied by interposing different filters in the light path or by turning on light sources of different colors. For example, each module could include red, green and blue LEDs driven in a field-sequential mode to illuminate a monochrome LCD light modulator. The LEDs may be operated cyclically to issue R, G and B light at a relatively high frequency. The LCD may be operated in synchronization with the cycling of the light sources to present images to be displayed in red, green and blue respectively.

### Additional Embodiments of Multi-Segment Displays/Projectors

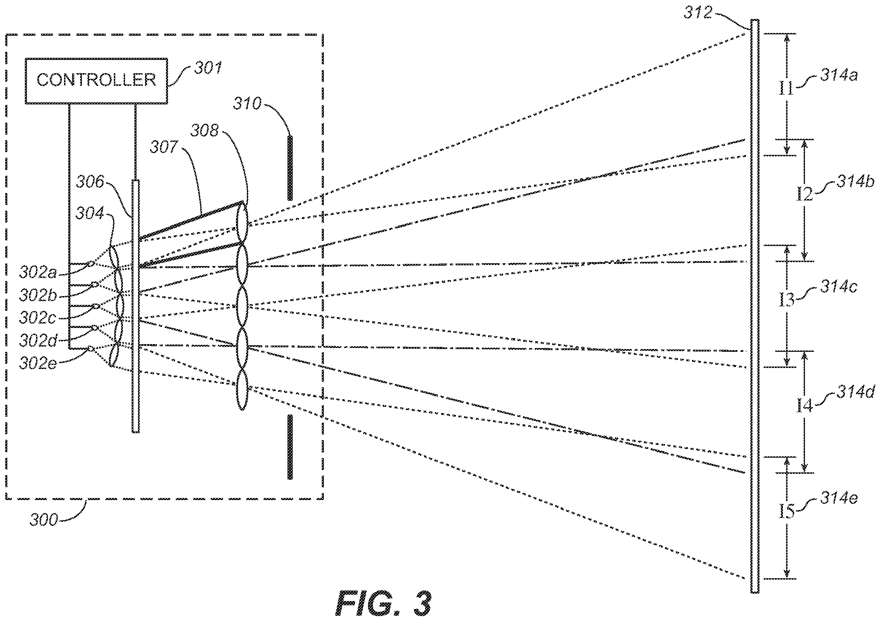

In continued reference to FIGS. 3, 4 and 5, many additional embodiments of multi-segment imaging systems, displays and/or projectors will now be described.

FIG. 3 depicts one embodiment of a multi-segment imaging system 300. Imaging system 300 comprises an array of emitters 302a-e (e.g. high power LEDs, OLEDS, quantum dots or any other suitable emitters) - wherein each emitter 302 provides light into a first optical element 304. First optical element 304 (shown schematically) may comprise one, two or more optical elements - e.g., a collimating lens and/or condenser or other lenses (e.g. 50 mm focal length) and/or a polarizing re-capture element, as discussed further herein. This light illuminates at least a portion of a modulator 306. Modulator 306 may comprise any suitable light modulator, including a LCD panel and a plurality of its subpixels (which may be either colored or monochrome or a combination thereof). Emitters 302 may optionally be locally dimmed according to control signals produced from controller 301. In addition, modulator 306 may be controlled by controller 301 in accordance to image data that is intended to be rendered upon projection screen 312. In one embodiment, modulator 306 may comprise a LCD screen. The resolution of the LCD screen may vary according to performance requirements of the system - e.g., 1680 by 1050 resolution may suffice in one embodiment; but other resolutions may also suffice.

Once the light has been modulated and transmitted through the LCD panel 306, the light may illuminate a set of projector lenses 308. In one embodiment, the light transmitted from the LCD may be further transmitted through a set of conduits and/or baffles (with one such baffle 307 shown in FIG. 3) to mitigate any undesirable optical cross-talk. Further along the light path, the light may be directed to pass through port 310. Once the light is projected beyond port 310, the light - depending upon the overlap due to the direction of each of the light paths from the emitters - illuminates a screen 312 at a distance away from system 300.

As may be seen in FIG. 3, the light paths of the emitters 302a-e may be directed to fan outward - i.e., where the emitters at either end of the array of emitters illuminates the edges of the screen in overlapping fields 314a-e, as shown.

FIG. 4 is another embodiment of a multi-segment imaging system 300. In this embodiment, the emitters are aligned so that the light paths of the emitters 302a-e produce overlapping fields 314e-a, as shown in a fanning inwards fashion. Fanning the illumination in a given direction (e.g., inward or outward) may be accomplished in a variety of ways - e.g. positioning the modulators in a fanning direction or otherwise directing the light path by use of optical elements in a fanning direction. It will be appreciated that, while the projection screen may be a flat surface, the projection screen may also have some curvature.

FIG. 3A depicts how light from this plurality of light paths - emanating from its associated projector lens -- may converge and overlap upon a projection screen 312. In the embodiment of FIG. 3, the image area 314 may spread out from the projected lens (whose area 320 is shown in dashed line form for comparison) and overlap with optically adjacent segments. It should be appreciated that, while the illumination pattern is shown as substantially circular regions in a rectangular array pattern, many other patterns are of course possible and suffice for the purposes of the present application. For example, instead of circular areas of illumination, the areas of illumination may be substantially rectangular, or any other suitable areas. In addition, instead of a substantially rectangular array pattern, the areas of illumination may form a substantially hexagonal pattern of overlapping illumination areas, or any other suitable pattern.

This embodiment may comprise one or more black and white (or color) LCD panels - together with an array of illumination optics and an array of projection optics to project overlapping images onto a screen in a cinema. In one embodiment, each panel may comprise a plurality of such optical systems. For merely expository reasons, each panel may comprise around 50-100 illumination and projection optic systems. Each illumination optics system may further comprise a high power LED (such as that used in LED projectors) that can be modulated, and optics to focus the light through the LCD panel and into the projection optics. The illumination optics may also contain polarization recycling optical elements.

Following the example above, each projection optics system may comprise a projection lens capable of focusing the sub-segment of the LCD onto the screen such that approximately 1/50 - 1/100 of the screen is covered. In embodiments affecting a low resolution image, expensive lenses may not be required. The 50-100 sub-segment images may then be projected onto the screen such that they produce overlapping images with 50-100 spatially separated images on the screen. When projecting an image, the LEDs may be modulated in a dual modulated fashion, and the image on the LCD is adjusted as appropriate for the LED level. The image on the LCD is a series of sub-segments of the desired image-such that, when projected with the multiple optics, the image on the projection screen produces the desired image.

In order to determine the image needed on the LCD panel, calibration with a high resolution image may be desired. Algorithms to determine the scaling, trapezoidal correction, levels, etc. may be used from the camera images to determine the image needed on the LCD panel. The LCD panels may be dual modulation panels, e.g. two black and white panels in series. Color panels may also suffice.

### Alternative Embodiments of Single Segments

In continued reference to FIGS. 5A, 5B, 6, 7 and 8, a variety of embodiments of portions and/or segments of the imaging system are shown -- in which such portions comprise a portion of a light path from a single or small number of emitters.

FIGS. 5A and 5B are embodiments of a segment of a multi-segment imaging system - in particular, showing the light path of a single emitter 302. As discussed, light from emitter 302 transmits through optical element 304 (which may comprise of one or more optical lens or other elements). Light transmitted through optical element 304 illuminates a first modulator 306 (e.g. LCD panel or the like), in the case of FIG. 5A. In the case of FIG. 5B, a first modulator 306a may illuminate a second modulator 306b (e.g. LCD panel or the like). The second modulator may be used to project images of increased dynamic range of the images projected. The use of two or more modulators for increasing the dynamic range of projected images is disclosed in co-owned United States Patent Application Publication Number 20080043303 entitled "HDR DISPLAYS WITH OVERLAPPING DUAL MODULATION".

Once the desired modulation of the light is affected by one or more modulators, the light may illuminate a projector lens308 - and thereafter, illuminate a portion of a projection screen 312. In the case of FIG. 5B, the projection lens 308 is more focused upon the modulator 306b than it is on the modulator 306a, which may be slightly defocused. Such defocused modulation may of course be anticipated for and controlled by the signals given to the controllable elements (e.g., emitters and modulators) in the software control. As it is the projection lens that maps the light from modulator 306b to the projection screen 312, optical element 304 need not focus on either modulator - but through the modulators to the projection lens for maximum efficiency.

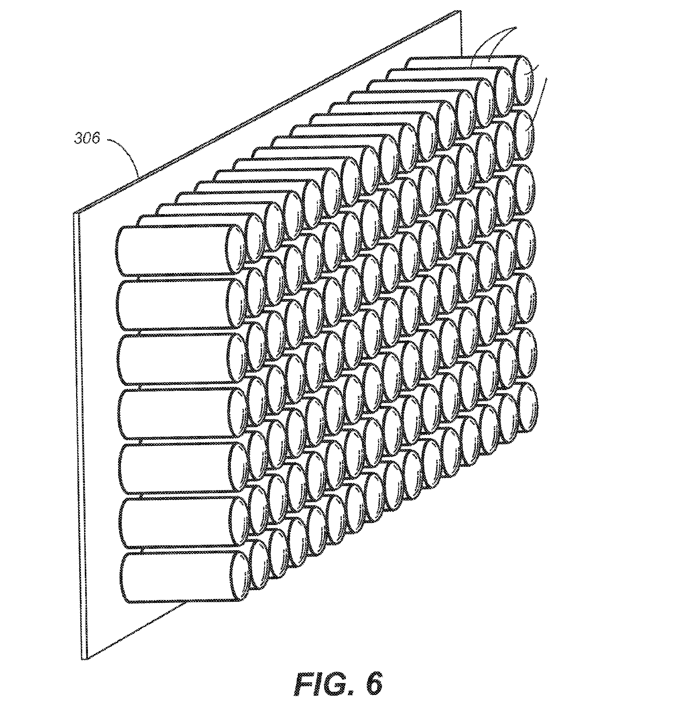

FIG. 6 shows an embodiment of an array of conduits conducting light from a modulator to an array of projection lens. As shown, the light emanating from modulator 306 may be illuminate conduits 602. Conduits 602 may be light baffles or other light containment element - e.g., to help prevent light cross-talk between light that has been modulated to a desired amount. At the end of conduit 602, projector lenses 308 may be positioned to provide a desired amount of light adjustment, prior to the light being projected to the screen.

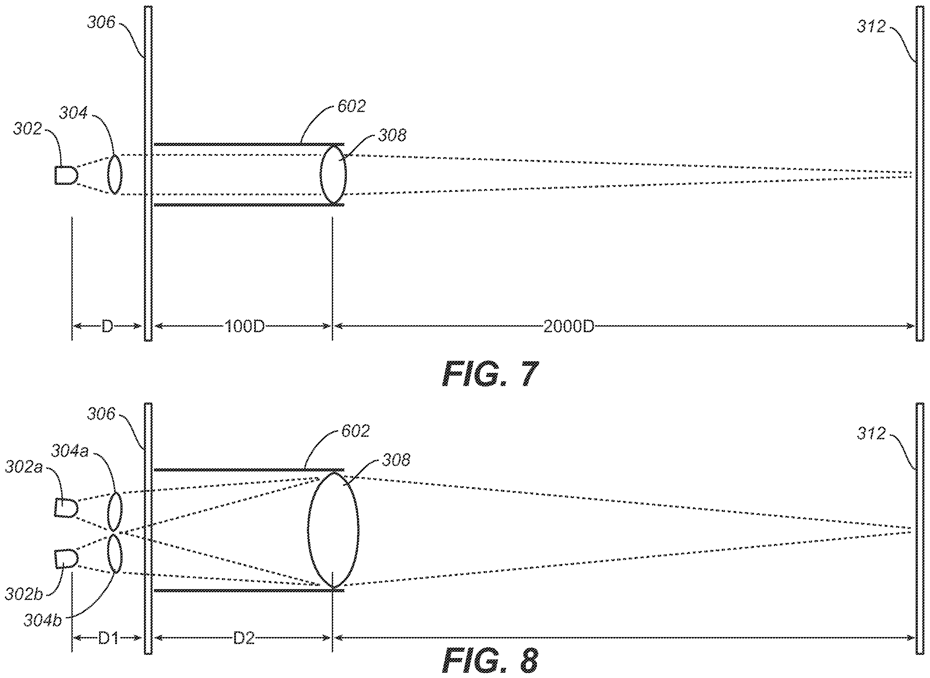

FIG. 7 shows one embodiment of a segment of an imaging system in which emitter 302 illuminates first optical element 304 and sits back a distance D (e.g., D= 4 inches) from modulator 306. Light from modulator 306 is transmitted through conduit 602 to projector lens 308 at a distance approximately 100 x D from the modulator. Thereafter, light propagates from projector lens 308 to screen 312 at a distance approximately 2000 x D.

FIG. 8 shows another embodiment of a segment of an imaging system, similar to FIG. 7 - but that conduit 602 and lens 308 may input light from two (or more) emitters 302a,b that is transmitted through first optical elements 304a,b respectively. In this embodiment, emitters 302a,b may be placed further back from modulator 306 than in the embodiment of FIG. 7.

### Embodiments of Segment Arrays

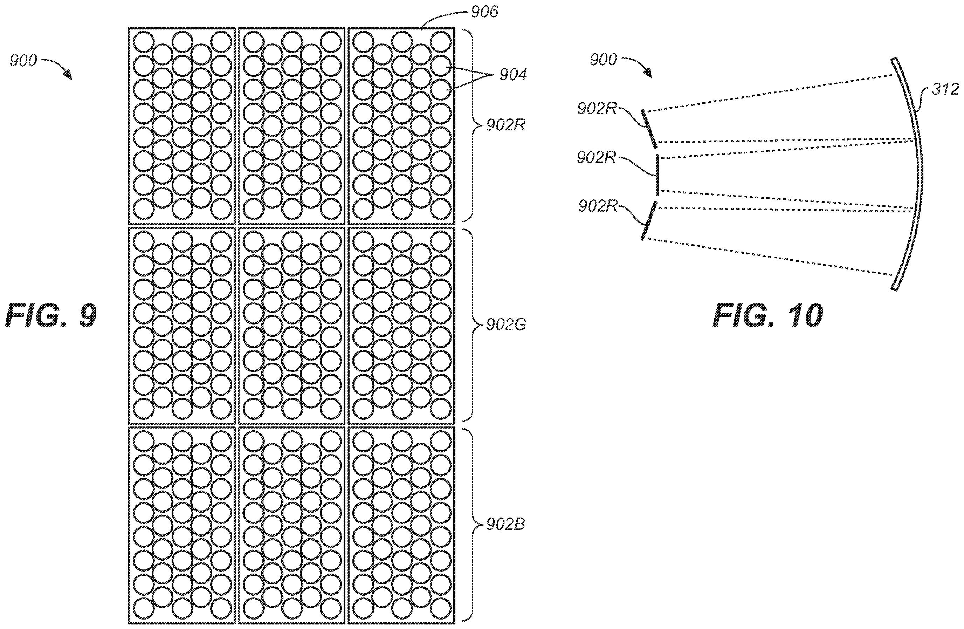

In continued reference to FIGS. 9, 10, 11 and 12, various embodiments of imaging systems as made in accordance with the principles of the present application will now be described.

FIG. 9 depicts one embodiment comprising an array (here, a 3x3) of modulator panels 906. Each modulator panel 906 receives the light from an array of emitters 904. As shown in this example, one modulator panel 906 may receive up to 38 emitters 904. Additionally as shown, each row may comprise a single color of emitted lights - e.g., row 902R may emit red color light from single red emitters (row 902G green color and row 902B blue color, respectively). Thus, in this example, the system may comprise 114 emitters per color (i.e. 38 x3); and 342 lens segments (38 x 9).

FIG. 10 depicts one embodiment of an imaging system in which the panels of FIG. 9 illuminate a projector screen 312. As shown, FIG. 10 is a top view of one portion of FIG. 9 (and more precisely, the red portion of the system and its illumination pattern). The three panels 902R are shown as fanning out and projecting the red color for image illumination to the screen 312. The other colors (e.g., green and blue) panels may also be constructed and arrayed similarly.

It should be noted that the screen 312 may be designed as either a curved surface (as shown in FIG. 10) or a flat surface (as shown in FIG. 1). It should also be appreciated that the imaging system may employ any other suitable primary colors as desired. It may suffice that the primaries chosen may provide a suitable color gamut for the images intended to be rendered. It will be appreciated that other array sizes (other than 3x3) and number of emitters per panel may also suffice for the purposes of the present invention. It may be desirable to include as many panels and emitters as may be desired to provide suitable luminosity for the images intended to be rendered.

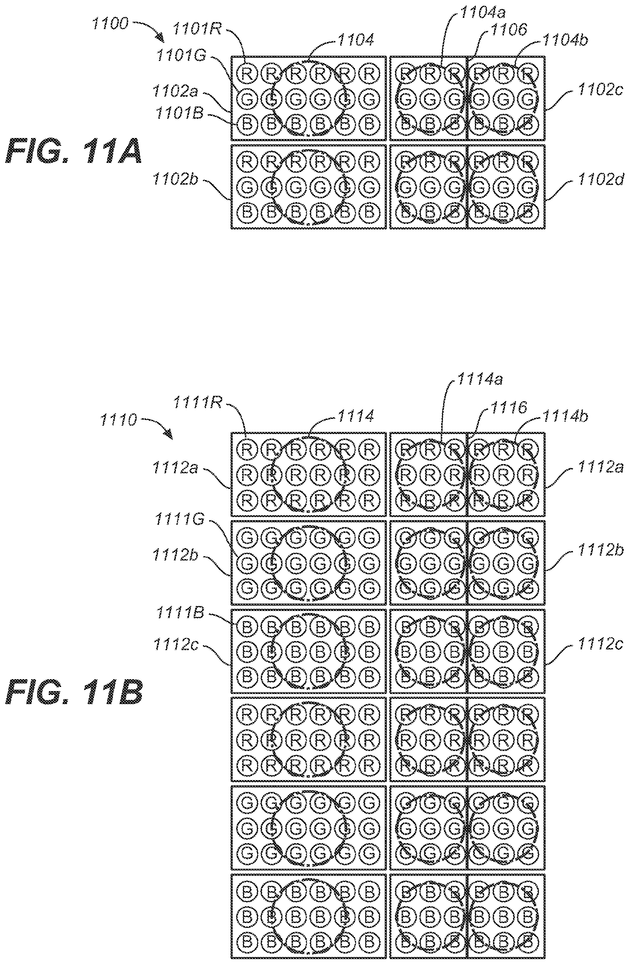

FIGS. 11A and 11B depict two other embodiment comprising an array of modulator panels. FIG. 11A shows a 2x2 array 1100 of modulator panels 1102a, 1102b, 1102c and 1102d. Each modulator panel 1102 receives the light from an array of emitters (e.g., 1101R, 1101G, 1101B). In this embodiment, each panel 1102 may receive light from a plurality of different color emitters (e.g., red, green and blue, as depicted here). Each of these modulator panels may provide light to one projector lens (shown here as 1104) or perhaps two or more projector lens (as shown here as 1104a and 1104b). FIG. 11B shows an array 1110 of modulator panels 1112a, 1112b and 1112c in a first 2x3 array (which may or may not be repeated, as shown). In this case, each modulator panel may be illuminated by a set of emitters (e.g., 1111R, 1111G and 1111B - which may provide a single color of illumination for each modulator panel, as shown and if desired). Each modulator panel may provide light to one projector lens 1114 or two or more projector lenses (e.g. 1114a and 1114b, as desired). Where there is a possibility of undesirable cross-talk, baffles or conduits 1106 and 1116 may be provided to mitigate or abate such cross-talk.

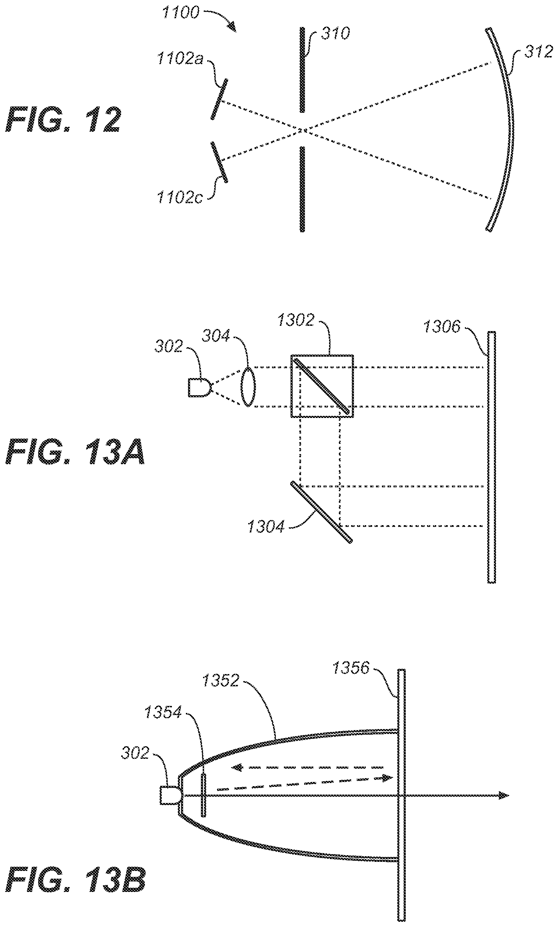

FIG. 12 depicts one embodiment, in a schematic fashion, as to how the light from these panels may be aligned and/or constructed to provide illumination for a projector screen 312. For example, looking as a top view, panels (for one example, 1102a and 1102c) may be arrayed to cross-illuminate (e.g. fanning inward) the screen (through port 310), as depicted in FIG. 4. As with FIGS. 9 and 10 above, the embodiments of FIGS. 11A, 11B and 12 may be designed with a different number of panels, different arrays of colored emitters, and even different colored emitters themselves.

### Polarized Light Re-capture

In any of the aforementioned embodiments described herein, it may be desired to design a segment that increases the luminous efficiency of the individual emitters. As is known, light from an LED emitter may emit light comprising different polarization states in an uncollimated fashion.

FIGS. 13A and 13B are different embodiments of a polarization re-capture element that may be utilized in the design of the present imaging system. As shown in FIG. 13A, light from emitter 302 may be guided by first optical element 304 to illuminate a polarizing beam splitter 1302. A first beam of light may transmit through to modulator 1306 with a given polarization - while a second beam part may be reflected (or otherwise redirected) to a mirrored surface 1304 that may in part the same polarization to the second beam as the first beam. Thereafter, the second beam may be deflected from surface 1304 to modulator 1306 - with the same polarization and collimated - thus, re-capturing light from the emitter that may not have been useful for illuminating an image on a projection screen.

FIG. 13B is yet another possible polarizing re-capture element that may also be possible for the present system. Light from emitter 302 may illuminate a first polarizer reflector 1356 - which preferentially passes a given polarity of light, while reflecting back light which is not so polarized within cavity 1352. The light within the cavity may reflect off of 1352 and surface 1354 until such time as the light returning to the first polarizer reflector 1356 has the preferential polarization, and is then transmitted through 1356.

It will be appreciated that the present systems of projection may be designed to affect 3D projection images as well. In merely one embodiment, if may be possible to duplicate the number of modulator panels and illuminate the projection screen in a manner conducive to affecting 3D images. In addition, all known manners of producing 3D images may be affected with the design of the present system - to include, but not limited to, spectral separation, polarization methods or the like.

A detailed description of one or more embodiments of the invention, read along with accompanying figures, that illustrate the principles of the invention has now been given. It is to be appreciated that the invention is described in connection with such embodiments, but the invention is not limited to any embodiment. The scope of the invention is limited only by the claims. Numerous specific details have been set forth in this description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

## Claims

1. A projection system comprising:
an imaging system (300), said imaging system comprising:
a plurality of controllable emitters (302), each said emitter (302) providing light for a light path; and
a plurality of first optical elements (304), each said first optical element (304) receiving light from one of said emitters;
**characterized in that** said imaging system further comprises:
a controllable modulator (306) receiving light from said plurality of first optical elements (304), each said controllable emitter (302) illuminating a corresponding modulator area of said controllable modulator (306), wherein said corresponding modulator area is distinct from the illuminated modulator areas of neighboring controllable emitters (302), and wherein each illuminated modulator area corresponds to a portion of an image to be projected;
a plurality of projection lenses (308) disposed in an array;
a controller (301), said controller (301) sending control signals to said controllable emitters (302) and said controllable modulator (306), said control signals applied according to image data to be rendered upon said projection screen (312) by projected light from said plurality of projection lenses (308);
**characterized in that** the imaging system further comprises
a plurality of conduits (307), each said conduit (307) receiving light from at least one corresponding illuminated modulator area of said controllable modulator (306); **in that**
each of said projection lenses (308) is receiving light from at least one corresponding conduit (307), and **in that**
each conduit (307) is disposed between said controllable modulator (306) and said plurality of projection lenses (308), wherein each of said projection lenses (308) is disposed to illuminate a corresponding projection screen area (314) on a projection screen (312), wherein said corresponding projection screen area (314) partially overlaps with illuminated projection screen areas (314) of neighboring projection lenses (308) so that the image to be projected is superimposed from said partially overlapping projection screen areas (314) of said plurality of projection lenses (308).

2. The projection system of claim 1 comprising a plurality of said imaging system.

3. The projection system (300, 900) of Claim 1 or Claim 2 wherein said controllable emitters (302) comprises one of a group, said group comprising: LED, OLED and quantum dots.

4. The projection system (300, 900) of any of Claims 1-3 wherein said first optical elements (304) comprise one or more of a group, said group comprising: lens, collimating lens, condenser and polarizing re-capture elements.

5. The projection system (300, 900) of any of Claims 1-4 wherein said controllable modulator (306) comprises a LCD panel.

6. The projection system (300, 900) of any of Claims 1-5 wherein each of said plurality of partially overlapping projection screen areas (314) of illumination comprise one of a group, said group comprising: substantially circular areas of illumination and substantially rectangular areas of illumination.

7. The projection system (300, 900) of any of Claims 1-5 wherein said plurality of partially overlapping projection screen areas (314) of illumination comprising one of a group, said group comprising: substantially rectangular array pattern of areas of illumination and substantially hexagonal array pattern of areas of illumination.

8. The projection system (300, 900) of any of Claims 1-7 wherein each said imaging system further comprises:
a second controllable modulator (306b), said second controllable modulator (306b) disposed to receive light from said controllable modulator, said second controllable modulator receiving control signals from said controller; and further wherein each of said conduits is disposed over a portion of said second controllable modulator.

9. The projection system (300, 900) of any of Claims wherein each projection lens (308) receives light from a single corresponding illuminated modulator area through a single conduit (307).

10. The projection system (300, 900) of any of Claims 1-8 wherein each projection lens (308) receives light from two corresponding illuminated modulator areas through a single conduit (307).

11. The projection system (900) of any of Claims 2-10 wherein the respective controllable modulators (906) of said plurality of imaging systems are disposed to transmit light fanning inward to illuminate said projection screen (312).

12. The projection system (900) of any of Claims 2-10 wherein the respective controllable modulators (906) of said plurality of imaging systems are disposed to transmit light fanning outward to illuminate said projection screen (312).

13. The projection system of any of Claims 2-12 wherein the controllable modulators (906) of said plurality of imaging systems are disposed as an array of controllable modulators.

14. The projection system (900) of any of Claims 2-12 wherein the controllable modulators (906) of said plurality of imaging systems are disposed as an array of controllable modulators and further wherein each controllable modulator (906) provides illumination for two projection lenses (308).

## Patentansprüche

1. Projektionssystem umfassend:
ein Bildgebungssystem (300), wobei das Bildgebungssystem umfasst:
eine Vielzahl von steuerbaren Emittern (302), wobei jeder Emitter (302) Licht für einen Lichtpfad bereitstellt; und
eine Vielzahl von ersten optischen Elementen (304), wobei jedes erste optische Element (304) Licht von einem der Emitter empfängt;
**dadurch gekennzeichnet, dass** das Bildgebungssystem weiter umfasst:
einen steuerbaren Modulator (306), der Licht von der Vielzahl von ersten optischen Elementen (304) empfängt, wobei jeder steuerbare Emitter (302) ein entsprechendes Modulatorgebiet des steuerbaren Modulators (306) beleuchtet, wobei das entsprechende Modulatorgebiet sich von den beleuchteten Modulatorgebieten benachbarter steuerbarer Emitter (302) unterscheidet und wobei jedes beleuchtete Modulatorgebiet einem Abschnitt eines zu projizierenden Bilds entspricht;
eine Vielzahl von Projektionslinsen (308), die in einem Array angeordnet sind;
eine Steuerung (301), wobei die Steuerung (301) Steuersignale an die steuerbaren Emitter (302) und den steuerbaren Modulator (306) sendet, wobei die Steuersignale gemäß Bilddaten, die zu rendern sind, auf den Projektionsbildschirm (312) durch projiziertes Licht von der Vielzahl von Projektionslinsen (308) angewendet wird;
**dadurch gekennzeichnet, dass** das Abbildungssystem weiter umfasst
eine Vielzahl von Leitungen (307), wobei jede Leitung (307) Licht von mindestens einem entsprechenden beleuchteten Modulatorgebiet des steuerbaren Modulators (306) empfängt;
dadurch, dass jede der Projektionslinsen (308) Licht von mindestens einer entsprechenden Leitung (307) empfängt und dadurch, dass jede Leitung (307) zwischen dem steuerbaren Modulator (306) und der Vielzahl von Projektionslinsen (308) angeordnet ist, wobei jede der Projektionslinsen (308) angeordnet ist, ein entsprechendes Projektionsbildschirmgebiet (314) auf einem Projektionsbildschirm (312) zu beleuchten, wobei das entsprechende Projektionsbildschirmgebiet (314) teilweise mit beleuchteten Projektionsbildschirmgebieten (314) benachbarter Projektionslinsen (308) überlappt, sodass das zu projizierende Bild von den teilweise überlappenden Projektionsbildschirmgebieten (314) der Vielzahl von Projektionslinsen (308) überlagert ist.

2. Projektionssystem nach Anspruch 1, umfassend eine Vielzahl des Abbildungssystems.

3. Projektionssystem (300, 900) nach Anspruch 1 oder Anspruch 2, wobei die steuerbaren Emitter (302) eines von einer Gruppe umfassen, die Gruppe umfassend: LED, OLED und Quantenpunkte.

4. Projektionssystem (300, 900) nach einem der Ansprüche 1-3, wobei die ersten optischen Elemente (304) eines oder mehr einer Gruppe umfassen, die Gruppe umfassend: Linse, Kollimatorlinse, Kondensator und polarisierende Rückgewinnungselemente.

5. Projektionssystem (300, 900) nach einem der Ansprüche 1-4, wobei der steuerbare Modulator (306) ein LCD-Panel umfasst.

6. Projektionssystem (300, 900) nach einem der Ansprüche 1-5, wobei jedes der Vielzahl von teilweise überlappenden Projektionsbildschirmgebieten (314) zur Beleuchtung eines einer Gruppe umfasst, die Gruppe umfassend: im Wesentlichen kreisförmige Gebiete zur Beleuchtung und im Wesentlichen rechteckige Gebiete zur Beleuchtung.

7. Projektionssystem (300, 900) nach einem der Ansprüche 1-5, wobei die Vielzahl von teilweise überlappenden Fortsatzbildschirmgebieten (314) zur Beleuchtung eines von einer Gruppe umfassen, die Gruppe umfassend: im Wesentlichen rechteckige Arraystruktur von Gebieten zur Beleuchtung und im Wesentlichen hexagonale Arraystruktur von Gebieten zur Beleuchtung.

8. Projektionssystem (300, 900) nach einem der Ansprüche 1-7 wobei jedes Bildgebungssystem weiter umfasst:
einen zweiten steuerbaren Modulator (306b), wobei der zweite steuerbare Modulator (306b) angeordnet ist, Licht vom steuerbaren Modulator zu empfangen, wobei der zweite steuerbare Modulator Steuersignale von der Steuerung empfängt; und weiter wobei jede der Leitungen über einem Abschnitt des zweiten Steuerbaren Modulators angeordnet ist.

9. Projektionssystem (300, 900) nach einem der Ansprüche 1-8, wobei jede Projektionslinse (308) Licht von einem einzelnen entsprechenden beleuchteten Modulatorgebiet durch eine einzelne Leitung (307) empfängt.

10. Projektionssystem (300, 900) nach einem der Ansprüche 1-8, wobei jede Projektionslinse (308) Licht von zwei entsprechenden beleuchteten Modulatorgebieten durch eine einzelne Leitung (307) empfängt.

11. Projektionssystem (900) nach einem der Ansprüche 2-10, wobei die jeweiligen steuerbaren Modulatoren (906) der Vielzahl von Bildgebungssystemen angeordnet sind, um Licht zu übertragen, das sich nach innen auffächert, um den Projektionsbildschirm (312) zu beleuchten.

12. Projektionssystem (900) nach einem der Ansprüche 2-10, wobei die jeweiligen steuerbaren Modulatoren (906) der Vielzahl von Bildgebungssystemen angeordnet sind, Licht, das sich nach außen auffächert, zu übertragen, um den Projektionsbildschirm (312) zu beleuchten.

13. Projektionssystem nach einem der Ansprüche 2-12, wobei die steuerbaren Modulatoren (906) der Vielzahl von Bildgebungssystemen als ein Array von steuerbaren Modulatoren angeordnet sind.

14. Projektionssystem (900) nach einem der Ansprüche 2-12, wobei die steuerbaren Modulatoren (906) der Vielzahl von Bildgebungssystemen als ein Array von steuerbaren Modulatoren angeordnet sind und wobei weiter jeder steuerbare Modulator (906) Beleuchtung für zwei Projektionslinsen (308) bereitstellt.

## Revendications

1. Système de projection comprenant :
un système d'imagerie (300), ledit système d'imagerie comprenant :
une pluralité d'émetteurs aptes à être commandés (302), chacun desdits émetteurs (302) fournissant de la lumière pour un trajet de lumière ; et
une pluralité de premiers éléments optiques (304), chacun desdits premiers éléments optiques (304) recevant de la lumière en provenance de l'un desdits émetteurs ;
**caractérisé en ce que** ledit système d'imagerie comprend en outre :
un modulateur apte à être commandé (306) recevant de la lumière en provenance de ladite pluralité de premiers éléments optiques (304), chacun desdits émetteurs aptes à être commandés (302) éclairant une zone de modulateur correspondante dudit modulateur apte à être commandé (306), dans lequel ladite zone de modulateur correspondante est distincte des zones de modulateur éclairées d'émetteurs aptes à être commandés (302) voisins, et dans lequel chaque zone de modulateur éclairée correspond à une partie d'une image à projeter ;
une pluralité de lentilles de projection (308) disposées en réseau ;
un dispositif de commande (301), ledit dispositif de commande (301) envoyant des signaux de commande auxdits émetteurs aptes à être commandés (302) et audit modulateur à apte à être commandé (306), lesdits signaux de commande étant appliqués selon des données d'image à restituer sur ledit écran de projection (312) par de la lumière projetée à partir de ladite pluralité de lentilles de projection (308) ;
**caractérisé en ce que** le système d'imagerie comprend en outre une pluralité de conduits (307), chacun desdits conduits (307) recevant de la lumière en provenance d'au moins une zone de modulateur éclairée correspondante dudit modulateur apte à être commandé (306) ;
**en ce que** chacune desdites lentilles de projection (308) reçoit de la lumière en provenance d'au moins un conduit correspondant (307), et **en ce que** chaque conduit (307) est disposé entre ledit modulateur apte à être commandé (306) et ladite pluralité de lentilles de projection (308), dans lequel chacune desdites lentilles de projection (308) est disposée pour éclairer une zone d'écran de projection correspondante (314) sur un écran de projection (312), dans lequel ladite zone d'écran de projection correspondante (314) chevauche partiellement des zones d'écran de projection éclairées (314) de lentilles de projection (308) voisines de sorte que l'image à projeter est superposée à partir desdites zones d'écran de projection se chevauchant partiellement (314) de ladite pluralité de lentilles de projection (308).

2. Système de projection selon la revendication 1 comprenant une pluralité dudit système d'imagerie.

3. Système de projection (300, 900) selon la revendication 1 ou la revendication 2, dans lequel lesdits émetteurs aptes à être commandés (302) comprennent l'un parmi un groupe, ledit groupe comprenant : une LED, une OLED et des points quantiques.

4. Système de projection (300, 900) selon l'une quelconque des revendications 1 à 3, dans lequel lesdits premiers éléments optiques (304) comprennent un ou plusieurs parmi un groupe, ledit groupe comprenant : des lentilles, de lentilles de collimation, un condensateur et des éléments de recapture de polarisation.

5. Système de projection (300, 900) selon l'une quelconque des revendications 1 à 4, dans lequel ledit modulateur apte à être commandé (306) comprend une tablette à cristaux liquides.

6. Système de projection (300, 900) selon l'une quelconque des revendications 1 à 5, dans lequel chacune de ladite pluralité de zones d'écran de projection se chevauchant partiellement (314) comprend l'une parmi un groupe, ledit groupe comprenant : des zones d'éclairage sensiblement circulaires et des zones d'éclairage sensiblement rectangulaires.

7. Système de projection (300, 900) selon l'une quelconque des revendications 1 à 5, dans lequel ladite pluralité de zones d'écran de projection se chevauchant partiellement (314) comprend l'une parmi un groupe, ledit groupe comprenant : une organisation en réseau sensiblement rectangulaire de zones d'éclairage et une organisation en réseau sensiblement hexagonale de zones d'éclairage.

8. Système de projection (300, 900) selon l'une quelconque des revendications 1 à 7, dans lequel ledit système d'imagerie comprend en outre :
un second module apte à être commandé (306b), ledit second modulateur apte à être commandé (306b) étant disposé pour recevoir de la lumière en provenance dudit modulateur apte à être commandé, ledit second modulateur apte à être commandé recevant des signaux de commande en provenance dudit dispositif de commande ; et en outre dans lequel chacun desdits conduits est disposé par-dessus une partie dudit second modulateur apte à être commandé.

9. Système de projection (300, 900) selon l'une quelconque des revendications 1 à 8, dans lequel chaque lentille de projection (308) reçoit de la lumière en provenance d'une seule zone de modulateur éclairée correspondante à travers un seul conduit (307).

10. Système de projection (300, 900) selon l'une quelconque des revendications 1 à 8, dans lequel chaque lentille de projection (308) reçoit de la lumière en provenance de deux zones de modulateur éclairées correspondantes à travers un seul conduit (307).

11. Système de projection (900) selon l'une quelconque des revendications 2 à 10, dans lequel les modulateurs aptes à être commandés respectifs (906) de ladite pluralité de systèmes d'imagerie sont disposés pour transmettre de la lumière se déployant vers l'intérieur pour éclairer ladite lentille de projection (312).

12. Système de projection (900) selon l'une quelconque des revendications 2 à 10, dans lequel les modulateurs aptes à être commandés respectifs (906) de ladite pluralité de systèmes d'imagerie sont disposés pour transmettre de la lumière se déployant vers l'extérieur pour éclairer ledit écran de projection (312).

13. Système de projection selon l'une quelconque des revendications 2 à 12, dans lequel les modulateurs aptes à être commandés (906) de ladite pluralité de systèmes d'imagerie sont disposés en tant que réseau de modulateurs aptes à être commandés.

14. Système de projection (900) selon l'une quelconque des revendications 2 à 12, dans lequel les modulateurs aptes à être commandés (900) de ladite pluralité de systèmes d'imagerie sont disposés en tant que réseau de modulateurs aptes à être commandés et en outre dans lequel chaque modulateur apte à être commandé (906) fournit un éclairage pour deux lentilles de projection (308).
